# EUROPÄISCHE PATENTANMELDUNG

(11) **EP 0 592 911 A1**
(43) Veröffentlichungstag der Anmeldung: **20.04.1994**
(21) Anmeldenummer: 93115984.2
(22) Anmeldetag: 04.10.1993
(51) Int. Cl.: B29C 67/22, B29C 45/00, C08J 9/14, C08L 67/04, B29K 105/04

(54) **Verfahren zur Herstellung von geschäumten Polylactid-Spritzgiessteilen hoher Festigkeit und Steifigkeit**

(30) Priorität: 14.10.1992 DE 4234620
(71) Anmelder: BASF Aktiengesellschaft, D-67063 Ludwigshafen (DE)
(72) Erfinder: Sterzel, Hans-Josef, Dr., D-6701 Dannstadt-Schauernheim (DE)

(57) **Zusammenfassung**

Verfahren zum Spritzgießen geschäumter Teile aus Polylactid, dadurch gekennzeichnet, daß die Polylactid-Schmelze lösungsmittelhaltig ist und sich während des Expandierens in der Form unter die Schmelztemperatur abkühlt und im Temperaturbereich zwischen Glaserweichungs- und Schmelztemperatur expandiert wird.

## Beschreibung

Poly-L-Lactid, Poly-D-Lactid sowie Copolymere daraus sind biologisch abbaubare Polymere. Bei der Verrottung dieser Polymere entstehen keine naturfremden Abbauprodukte, sondern nur Biomasse sowie Kohlendioxid. Aufgrund dieses Verhaltens haben Polylactide ein großes Potential, besonders im Verpackungsbereich vermehrten Einsatz zu finden.

Eine Rücknahme zu Recyclingzwecken mit umständlichem Sammeln, Reinigen, Sortieren sowie Aufschmelzen - alles energieverzehrende sowie verkehrs- und umweltbelastende Prozeduren - entfällt.

Polylactide werden unter Rohstoffgesichtspunkten vollständig auf der Basis nachwachsender Rohstoffe hergestellt.

Über Fermentation erhält man eine 10 bis 15%ige Milchsäure, die zu reiner Milchsäure aufkonzentriert wird. Aus der Milchsäure wird unter Wasserabspaltung und Dimerisierung Lactid als polymerisierbares Monomeres hergestellt. Unter dem Einfluß von Lewis-Säuren werden L-Lactid, D-Lactid, DL-Lactid oder Mischungen davon zu hochmolekularen Produkten ringöffnend und unter Erhalt des asymmetrischen Kohlenstoffatoms polymerisiert. Die homopolymeren D- und L-Lactide weisen Schmelzpunkte um 180°C auf, der Zug-E-Modul liegt bei Raumtemperatur bei 3.500-4.000 N/mm2, die Zugfestigkeit bei 60-70 N/mm2, wobei die Gewichtsmittel der Molmassen 50.000 bis 200.000 g/Mol betragen. Die Glaserweichungstemperatur liegt bei 50°C.

Bei allen diesen für polymere Werkstoffe sehr vorteilhaften Eigenschaften weisen Polylactide gerade für die Verarbeitung einen Nachteil auf: Sie kristallisieren so langsam, daß speziell beim Spritzgießen sehr lange Kühlzeiten bis zu mehreren Minuten erforderlich sind, um teilkristalline Formkörper mit Wärmeformbeständigkeiten oberhalb der Glasübergangstemperatur zu erhalten.

Es war damit Aufgabe der Erfindung, für Polylactide Verarbeitungsbedingungen zu finden, welche den Nachteil der langsamen Kristallisation nicht aufweisen und zu schnell verarbeitbaren Teilen hoher Festigkeit, Steifigkeit und Wärmeformbeständigkeit führen.

Diese Aufgabe wird durch die Merkmale der Patentansprüche 1 bis 5 gelöst, da man den Nachteil der langsamen Kristallisation nutzt und geradezu zu einem Vorteil ummünzt, indem man die Schmelze in eine Form einspritzt und dort unter dem Einfluß eines Treibmittels bei einer Temperatur zwischen Glaserweichungstemperatur und Schmelztemperatur unter Aufschäumen multiaxial dehnt, wobei das Polylactid orientiert wird und dabei zu einem hohen Anteil kristallisiert.

Diese Verfahrensweise unterscheidet sich wesentlich von dem Verfahren zur Herstellung von mit Treibmitteln geschäumten Spritzgußteilen nach dem Stand der Technik: Dort weden dem zu verarbeitenden Thermoplasten Treibmittel, vorzugsweise aus der Klasse der Azodicarbonamide, meist durch Aufpudern zugemischt. Das so behandlete Thermoplastgranulat wird im Zylinder einer Spritzgießmaschine aufgeschmolzen, wobei sich das Treibmittel unter Stickstoffabspaltung zersetzt. Durch Aufbringen eines hohen Staudrucks bis zu 1 500 bar an der Düse wird der Stickstoff in der Schmelze gehalten und am Entspannen gehindert. Schließlich spritzt man ein Bruchteil des Formenvolumens der Schmelze/Stickstoffmischung in die kältere Form ein, die unter Normaldruck steht. Dort expandiert der Stickstoff die Schmelze, und es wird ein geschäumtes Teil, meist mit dichter Außenhaut, erhalten.

Zur Erzeugung einer homogenen Schaumstruktur werden dem Thermoplasten bis zu 0,5 % eines den Schäumvorgang nukleierenden heterogenen Nukleierungsmittels wie Talkum zugesetzt.

Im Gegensatz zum erfindungsgemäßen Verfahren erfolgt das Aufschäumen immer bei einer Temperatur oberhalb der Schmelztemperatur, weil die aufschäumende Schmelze aufgrund ihrer relativ geringen Wärmeleitfähigkeit so langsam abkühlt, daß der Schaumvorgang bereits zum Stillstand gekommen ist, während die Temperatur im Inneren des Teils noch oberhalb der Schmelztemperatur des Thermoplasten liegt.

Das erfindungsgemäße Verfahren wird im folgenden näher beschrieben:
Zur Herstellung der erfindungsgemäßen Spritzgießmasse wird in einer Variante eine Polylactid-Schmelze unter Ausschluß von Luftsauerstoff und Feuchtigkeit bei Temperaturen vo 185 bis 215o^{C} in einem gasdichten Extruder mit einem organischen Lösungsmittel unter dessen Dampfdruck vermischt, wobei das organische Lösungsmittel mit der Polylactid-Schmelze eine einphasige Mischung bildet.

Diese erfindungsgemäße Variante wird im folgenden näher beschrieben:
Zur Herstellung der erfindungsgemäßen Spritzgießmasse wird eine Polylactid-Schmelze unter Ausschluß von Luftsauerstoff und Feuchtigkeit bei Temperaturen von 185°C bis 215°C in einem gasdichten Extruder mit einem organischen Lösungsmittel unter dessen Dampfdruck vermischt, wobei das organische Lösungsmittel mit der Polylactid-Schmelze eine einphasige Mischung bildet. Unter Normaldruck beträgt die Siedetemperatur des Lösungsmittels 30 bis 110°C. Die Mischung aus Schmelze und Lösungsmittel wird am Ausgang des Extruders durch Düsen gepreßt, an denen ein rotierendes Schneidmesser in Gegenwart von Wasser vorbeigeführt wird. Die austretenden Stränge werden dadurch sofort abgeschreckt und abgeschlagen, so daß ein Aufschäumen beim Übergang in die Normaldruckzone vermieden wird. Dabei ist es günstig, das Wasser auf 2 bis 10°C abzukühlen. Als Lösungsmittel sind beispielsweise Ameisensäuremethylester, Ameisensäureethylester, Essigsäuremethylester, Essigsäurepropylester, Dioxan oder Methylethylketon geeignet.

Die Lösungsmittelkonzentration beträgt 10 bis 30, vorzugsweise 15 bis 25 Gewichtsteile bezogen auf die zu 100 ergänzenden Gewichtsteile Polylactid. Das so hergestellte Granulat wird bei Raumtemperatur im Stickstoffstrom getrocknet, wobei es kristallisiert und ein Zusammenkleben vermieden wird.

Zur Herstellung kleinerer Mengen an imprägniertem Granulat ist es auch möglich, in einem Mischer mit Nukleierungsmittel imprägniertes Granulat vorzulegen und das organische Lösungsmittel bei Raumtemperatur unter Granulatbewegung über 1/2 bis 2 Stunden zuzudosieren, wobei das Lösungsmittel vom Polylactid-Granulat aufgenommen wird und das Polylactid kristallisiert.

Das Granulat wird einer Spritzgießmaschine zugeführt, die für treibmittelhaltiges Spritzgießmaterial ausgelegt ist und bei 160 bis 200°C aufgeschmolzen. Aufgrund des Lösungsmittelanteils resultiert ein Schmelzpunktserniedrigung, wodurch niedrigere Aufschmelztemperaturen als 180°C verwendet werden können.

Nach dem Einspritzen in die mit feinen Entlüfungsschlitzen versehene Form expandiert das Lösungsmittel die Schmelze unter seinem Dampfdruck, wobei aufgrund der aufzuwendenden Verdampfungwärme die expandierende Schmelze nahezu adiabatisch unter die Schmelztemperatur abkühlt und damit unterhalb der Schmelztemperatur gedehnt wird. Dabei tritt Orientierung und Kristallisation ein, wodurch die gewünschten hochfesten, hochsteifen und wärmeformbbeständigen Formteile in kurzen Zykluszeiten erhalten werden.

Die Verdampfungswärme des Lösungsmittels muß in jedem Fall größer sein als die bei der Kristallisation frei werdende Schmelzwärme, die bei Lactid-Homopolymeren ca. 60 J/g beträgt.

Bei einer Wärmekapazität des Polylactids von ca. 1,2 J/g x °K, Wärmekapazitäten der Lösungsmittel um 440 J/g x °K erhält man in der Form eine Abkühlung um 9 bzw. 31 °C, wenn der Gewichtsanteil an Lösungsmittel in der gleichen Reihenfolge 15 bzw. 20 % beträgt.

Aus Gründen der Arbeitssicherheit werden der Einfülltrichter sowie die Form der Spritzgießmaschine mit einer Absaugung versehen und das abgesaugte organische Lösungsmittel beispielsweise mittels eines Aktivkohlefilters absorbiert oder in einer Brennerflamme verbrannt.

### Beispiel

In einen Doppelwellenextruder mit 30 mm Schneckendurchmesser werden 8,0 kg/h Polylactid mit einer inhärenten Viskosität von 1,68, gemessen als 0,1%ige Lösung in Chloroform bei 25°C, unter Argon zur Verdrängung von Luftsauerstoff und Feuchtigkeit eindosiert und bei 205⁰C aufgeschmolzen. Das Polylactid enthielt 0,4 Gew.-Teile Talkum als Nukleierungsmittel für gleichmäßiges Schäumen.

Die Schnecken sind in Förderrichtung rechtsgängig, auf einen rechtsgängigen Aufschmelzteil folgt ein Stück linksgängige Schnecke, wodurch Schmelze eng zwischen Schnecken und Zylinder angepreßt und so der Extruder zum Einzug hin dynamisch abgedichtet wird. Auf das linksgängige Teil folgt ein rechtsgängiger Förderteil mit zwei Knetelementen. Sodann folgt ein weiteres Stück linksgängige Schnecke und danach vor den Austragsdüsen wieder ein rechtsgängiges Förderteil.

In das rechtsgängige Förderteil zwischen den abstauenden linksgängigen Teilen werden beim ersten Knetelement über ein auf 100 bar eingestelltes Druckhalteventil 2,0 kg/h Methylethylketon über eine Kolbendosierpumpe zugepumpt.

Die mit Lösungsmittel gemischte Schmelze wird durch Düsen gepreßt, und durch ein unter Wasser von 4°C durch ein direkt vor der Düsenplatte rotierendes Messer abgeschlagen.

Das erhaltene nasse Granulat wird in einem trockenen Stickstoffstrom bei 25°C getrocknet, wobei das Polylactid unter dem Einfluß des Lösungsmittels kristallisiert.

Das getrocknete und kristallisierte Granulat wird in einer Spritzgießmaschine bei 175°C aufgeschmolzen und in eine auf 120°C geheizte Form gespritzt, wobei soviel Schmelze dosiert wird, um die Form zu 1/3 ihres Volumens zu füllen. Bei einer maximalen Wandstärke des Formteils von 5 mm reicht eine Kühlzeit von 30 Sekunden, um ein steifes Teil ohne Kleben an der Formwand zu entformen.

## Patentansprüche

1. Verfahren zum Spritzgießen geschäumter Teile aus Polylactid, dadurch gekennzeichnet, daß die Polylactid-Schmelze lösungsmittelhaltig ist und sich während des Expandierens in der Form unter die Schmelztemperatur abkühlt und im Temperaturbereich zwischen Glaserweichungs- und Schmelztemperatur expandiert wird.

2. Verfahren nach Anspruch 1, dadurch gekennzeichnet, daß der Anteil an organischem Lösungsmittel im Polylactid 10 bis 30, vorzugsweise 15 bis 25 Gew.-% beträgt.

3. Verfahren nach den Ansprüchen 1 und 2, dadurch gekennzeichnet, daß die Siedetemperaturen der eingesetzten Lösungsmittel bei Normaldruck 30 bis 110°C betragen.

4. Verfahren nach den Ansprüchen 1 bis 3, dadurch gekennzeichnet, daß die eingesetzten Lösungsmittel mit der Polylactid-Schmelze einphasig mischbar sind.

5. Formteile, die nach den Ansprüchen 1 bis 4 hergestellt sind.
